Europäisches Patentamt

European Patent Office

Office européen des brevets

(11) Veröffentlichungsnummer: **0 098 467**
A1

# (12) EUROPÄISCHE PATENTANMELDUNG

(21) Anmeldenummer: 83106129.6

(22) Anmeldetag: 23.06.83

(51) Int. Cl.³: **F 16 L 15/00**, F 16 L 19/06

(30) Priorität: 02.07.82 US 394742

(43) Veröffentlichungstag der Anmeldung: 18.01.84
Patentblatt 84/3

(84) Benannte Vertragsstaaten: DE FR GB IT NL

(71) Anmelder: DEERE & COMPANY, 1 John Deere Road,
Moline Illinois 61265 (US)

(72) Erfinder: McBee, Steve Harlan, 109 S.W. Arlan Drive,
Ankeny Iowa 50021 (US)
Erfinder: Weinman, Francis, Jr., 3305 Crestmore Pl., Des
Moines Iowa 50310 (US)

(74) Vertreter: Feldmann, Bernhard et al, DEERE &
COMPANY European Office, Patent Department
Steubenstrasse 36-42 Postfach 503,
D-6800 Mannheim 1 (DE)

(54) **Einsatz zwischen zwei miteinander verbindbaren Flüssigkeitsdurchgängen.**

(57) Zwei Flüssigkeitsdurchgänge, beispielsweise in Form eines Fittings und eines Rohres (12) oder zweier Rohre, weisen an ihren zugehörigen Enden je eine kegelförmige Sitzfläche (16, 22) auf. Die Flüssigkeitsdurchgänge sind über eine Verschraubung (18, 14) entweder direkt miteinander verbindbar, wobei über die beiden Sitzflächen eine einwandfreie Abdichtung erzielt wird, oder sie nehmen zwischen sich einen Einsatz in Form einer Drossel (30) mit zwei Dichtflächen (34, 36), die zu den Sitzflächen passen, auf. Somit kann je nach Bedarf der Einsatz zwischen den beiden Flüssigkeitsdurchgängen eingebaut oder weggelassen werden, und die Verbindung bleibt stets dicht.

<u>Einsatz zwischen zwei miteinander verbindbaren Flüssigkeitsdurchgängen</u>

Die Erfindung betrifft einen Einsatz zwischen zwei miteinander verbindbaren Flüssigkeitsdurchgängen, der zwischen die beiden Flüssigkeitsdurchgänge gespannt ist und eine geneigt verlaufende Dichtfläche aufweist, die gegen eine entsprechend ausgebildete Sitzfläche des einen Flüssigkeitsdurchganges anliegt.

Dieser Einsatz (US-PS 4 054 157) findet bei einer Sanitärarmatur Verwendung, deren anderer Flüssigkeitsdurchgang mit einer Eckkante auf den Einsatz im verschraubten Zustand einwirkt. Hierdurch entsteht in diesem Bereich nur eine ringförmige Linienberührung, und eine allseitige Dichtwirkung ist nur möglich, wenn dieser Einsatz aus einem nachgiebigen Werkstoff wie Kunststoff ausgebildet ist. Dadurch kann bei einer Schraubverbindung die Überwurfmutter soweit angezogen werden, daß der Einsatz ganz zerstört wird, wobei die Dichtwirkung verlorengehen kann und mit Sicherheit weitere Funktionen, wie beispielsweise die einer Drossel, verlorengehen können. Die mit einem solchen Einsatz erzielte Dichtfunktion mag zwar bei Sanitärarmaturen ausreichen, da dort nur Drücke bis ca. 10 bar auszuhalten sind. Eine Verwendung in Systemen mit hohem Druck, wie in Hydrauliksystemen, ist jedoch nicht denkbar, da bereits bei Drücken von bis zu 500 bis 600 bar eine derartige Verbindung zu Leckagen führen wird. Ferner muß dieser Einsatz stets zwischen den Flüssigkeitsdurchgang geschaltet sein, da ansonsten eine einwandfreie Dichtfunktion wegen der fehlenden Dicht- und Sitzflächen nicht erreichbar ist. Eine linienförmige Dichtfläche ist auch im Hinblick auf in einem Hydrauliksystem möglicherweise auftretende Schwingungen mit großen Amplituden nicht empfehlenswert, da die Flächenpressungen zu hoch werden und bei Überschreitung der Elastizitätsgrenze eine bleibende Verformung auftritt, die der Dichtheit abträglich ist.

Die mit der Erfindung zu lösende Aufgabe wird darin gesehen, den Einsatz so weiterzubilden, daß die Verbindung der beiden Flüssigkeitsdurchgänge stets, d. h. auch bei hohen Belastungen bzw. hohen Drücken, flüssigkeitsdicht und in sich fest ist.

Diese Aufgabe ist erfindungsgemäß dadurch gelöst worden, daß der Einsatz mit einer weiteren geneigt verlaufenden Dichtfläche versehen ist, die gegen eine entsprechend ausgebildete endseitige Sitzfläche an dem anderen Flüssigkeitsdurchgang zur Anlage bringbar ist.

Das Vorsehen einer derartigen weiteren geneigten Dicht- und Sitzfläche bewirkt eine optimale Vergrößerung der gesamten Dichtfläche, die wiederum größere Kräfte, die zum Verbinden der beiden Flüssigkeitsdurchgänge aufgebracht werden, aufnehmen kann, ohne die zulässigen Flächenpressungen zu überschreiten, d. h. auch aus nachgiebigem Werkstoff eingesetzte Einsätze können Verwendung finden. Die ausreichend großen Dicht- und Sitzflächen machen die Verbindung auch steifer und in sich fester, so daß auftretende Schwingungen die Dichtfunktion normalerweise nicht nachteilig beeinflussen können. Die geneigte Ausbildung der Dicht- und Sitzflächen ergibt zudem ab einer bestimmten aufgebrachten Kraft Selbsthemmkräfte, die die Dichtfunktion positiv beeinflussen.

In zahlreichen Fällen ist es aus funktionellen Gründen erforderlich, den Einsatz für eine bestimmte Zeit oder für einen bestimmten Verfahrensablauf zu entfernen, weshalb eine Unteraufgabe der Erfindung darin gesehen wird, den Einsatz so weiterzubilden, daß die Verbindung der beiden Flüssigkeitsdurchgänge stets, d. h. auch bei hohen Belastungen bzw. hohen Drücken, flüssigkeitsdicht und in sich fest ist, auch dann, wenn der Einsatz keine Verwendung findet. Diese Aufgabe wird ohne endseitige Änderungen an den Flüssigkeitsdurchgängen dadurch gelöst, daß nach einem weiteren Merkmal der Erfindung die Neigungswinkel der Dichtflächen und der Sitzflächen gleich sind, da dann nach Entnahme des Einsatzes die Flüssigkeitsdurchgänge endseitig
ineinander steckbar sind. Die gleiche Ausbildung der Neigungswinkel führt zudem zu geringen Herstellungskosten, da
beispielsweise bei der Herstellung des Einsatzes unter Verwendung von Drehmaschinen stets die gleiche Meiselstellung
beibehalten werden kann und Umrüstzeiten oder die Verwendung
anderer Drehmeisel mit anderen Winkeln nicht anfallen.

Nach einem anderen Vorschlag der Erfindung wird eine weitere
Reduzierung der Herstellungskosten dadurch gewonnen, daß
die Dichtflächen und die Sitzflächen kegelförmig ausgebildet
sind.

Wenn der Einsatz ein Führungsteil aufweist, dessen Außendurchmesser so gewählt ist, daß der Einsatz in einem der
Flüssigkeitsdurchgänge spielfrei einsetzbar ist, ist erfindungsgemäß stets gewährleistet, daß die beiden Flüssigkeitsdurchgänge einwandfrei gegeneinander ausgerichtet sind
und Verkantungen in der Verbindung nicht auftreten können.
Außerdem kann der Einsatz vor dem Verbinden der beiden
Flüssigkeitsdurchgänge in einen Flüssigkeitsdurchgang eingesetzt werden und ist dort vor einem eventuellen Herausfallen beim Zusammenbau geschützt. Gemäß der Erfindung gewählte  Abmessungen des Führungsteils führen zudem zu geringstmöglichen Wirbelstromverlusten, da zwischen diesem
und dem Flüssigkeitsdurchgang kein Raum zur Wirbelbildung
verbleibt.

Wenn der Einsatz mit einer Drosselbohrung zum Begrenzen der
Durchflußmenge ausgebildet ist, ist es zweckmäßig, wenn die
Drosselbohrung in dem Führungsteil vorgesehen ist. Das
Führungsteil erstreckt sich in einem der Flüssigkeitsdurchgänge und kann innerhalb gewisser Grenzen beliebig
lang sein, weshalb es aus Festigkeitsgründen vorteilhaft
ist, die Drosselbohrung in dem Bereich mit dem meisten Material anzuordnen. Es ist somit auch genügend Material vorhanden, um die Drosselbohrung strömungstechnisch optimal zu gestalten.

Bei Flüssigkeitsdurchgängen, die über eine Schraubverbindung zusammengehalten werden, ist es problemlos, diese wahlweise über den Einsatz oder ohne diesen miteinander zu verbinden, wenn die Wandstärke des Einsatzes zwischen seinen Dichtflächen die Verschraubungstiefe der Schraubverbindung nur unwesentlich beeinflußt. Dies ist beispielsweise dann der Fall, wenn die Wandstärke nur einem oder zwei Gewindegängen entspricht und die Verschraubung beispielsweise sechs Gewindegänge aufweist. Es ist auch möglich, die Verschraubung von vornherein um zwei Gewindegänge zu verlängern. Eine Beeinflussung der Festigkeit der Schraubverbindung zum Schlechteren hin tritt jedenfalls nicht auf.

Zweckmäßig ist, daß der Einsatz aus einem relativ verformungsfesten Werkstoff durch Preß-, Guß-, Tiefzieh- oder Drehverfahren herstellbar ist.

In der Zeichnung sind zwei nachfolgend näher beschriebene Ausführungsbeispiele der Erfindung dargestellt. Es zeigt:

Fig. 1 eine Seitenansicht einer herkömmlichen konusförmigen, zerlegten Verschraubung mit einer Drossel,

Fig. 2 eine vergrößerte Ansicht der in Fig. 1 gezeigten Drossel,

Fig. 3 eine Vorderansicht zu Fig. 2,

Fig. 4 ein weiteres Ausführungsbeispiel einer Drossel,

Fig. 5 eine Vorderansicht zu Fig. 4.

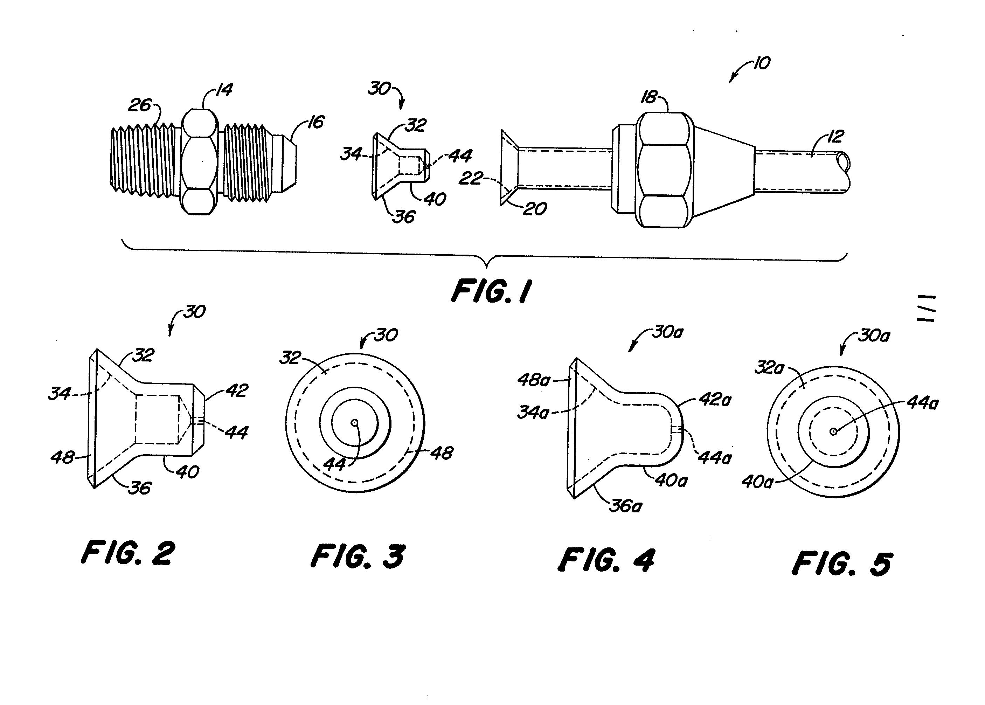

In Fig. 1 ist eine Verbindung oder Konusverschraubung 10 zum Verbinden zweier Flüssigkeitsdurchgänge in Form eines ersten Rohrteils 12 und eines zweiten nicht gezeigten Rohrteils dargestellt. Obwohl die Konusverschraubung 10 in Fig. 1 gerade ausgeführt gezeichnet ist, können selbstverständlich auch andere Ausführungsformen wie Bögen, T-Stücke, Kreuzstücke und andere sogenannte Fittings darunter verstanden werden. Die Konusverschraubung 10 enthält einen außen mit Gewinde versehenen Körper 14 mit einer bearbeiteten konischen Rohrsitzfläche 16. Der Öffnungswinkel gemessen von der Rohrsitzfläche 16 bis zur Mittellinie des Körpers 14 beträgt typischerweise 37° oder 45°. Eine mit Innengewinde versehene Konusmutter 18 ist als Gegenstück auf dem ersten Rohrteil 12 aufgesteckt, das einen kegelförmigen Sitz 20 mit einer kegelförmigen Sitz- oder Innenfläche 22 aufweist. Der Öffnungswinkel der kegelförmigen Innenfläche 22 ist gleich dem der Rohrsitzfläche 16. Normalerweise wird die Konusmutter 18 auf den Körper 14 aufgeschraubt, worauf die kegelförmige Innenfläche 22 des kegelförmigen Sitzes 20 flüssigkeitsabdichtend gegen die Rohrsitzfläche 16 gedrückt wird, wenn die Konusmutter 18 angezogen ist. Der zweite Rohrteil enthält ein herkömmliches Endstück, das ebenfalls nicht dargestellt ist und das auf ein Ende 26 des Körpers 14 aufgeschraubt wird. Selbstverständlich kann das zweite Rohrteil endseitig auch mit einer Sitzfläche, die der Rohrsitzfläche 16 entspricht, versehen sein, worauf beide Rohrteile direkt miteinander verbunden werden können, sofern ein Außengewinde vorgesehen ist.

Um die Durchflußmenge pro Zeiteinheit zwischen dem ersten Rohrteil 12 und dem zweiten Rohrteil begrenzen zu können, wird ein Einsatz wie etwa eine Drossel 30 in die Konusverschraubung 10 eingesetzt. Dieser Einsatz kann aber auch ein Stopfen, ein Meßgeber oder ein Sieb sein. Die Drossel 30 weist einen kegel- oder konusförmigen Teil 32 auf, der eine kegelförmige Innenfläche 34 hat, deren Öffnungswinkel gleich dem der kegelförmigen Rohrsitzfläche 16 bzw. 22 ist. Der kegelförmige Teil 32 ist des weiteren mit einer kegelförmigen Außenfläche 36 mit einem Öffnungswinkel, der ebenfalls gleich dem Öffnungswinkel der kegelförmigen Innenfläche 22 des kegelförmigen Sitzes 20 ist, versehen. Damit sind in dem bevorzugten Ausführungsbeispiel alle Öffnungswinkel identisch. Die kegelförmige Innen- bzw. Außenfläche 34 bzw. 36 stellen dabei Dichtflächen dar.

Der kegelförmige Teil 32 endet in seinem Bereich mit dem kleinsten Durchmesser in einem größtenteils hohlen und sich axial erstreckenden zylindrischen Teil 40, der auch als Führungsteil bezeichnet werden kann. Der zylindrische Teil 40 hat einen äußeren Durchmesser, der ungefähr so groß wie, jedoch etwas geringer als der innere Durchmesser des ersten Rohrteils 12 unmittelbar an dem kegelförmigen Sitz 20 ist. Ein sich axial erstreckendes Ende 42 des zylindrischen Teils 40 ist ebenfalls konisch ausgebildet und mit Ausnahme einer Öffnung 44, die eine begrenzte Durchflußmenge pro Zeiteinheit zwischen dem ersten und dem zweiten Rohrteil 12 zuläßt, verschlossen.

Um die Drossel 30 und die Konusverschraubung 10 zusammenzubauen, wird der zylindrische Teil 40 in den ersten Rohrteil 12 eingesetzt, wobei der zylindrische Teil 40 den kegelförmigen Teil 32 einwandfrei gegenüber dem kegelförmigen Sitz 20 ungeachtet der Stellung der Konusverschraubung 10 ausrichtet. Die Konusmutter 18 wird dann auf den Körper 14 aufgeschraubt und festgezogen, um den kegelförmigen Teil 32 zwischen dem kegelförmigen Sitz 20 und der Rohrsitzfläche 16 zu sichern. Das Festziehen wird dadurch erreicht, daß der kegelförmige Sitz 20 mit seiner Außenfläche gegen einen inneren Anschlag der Konusmutter 18 zur Anlage kommt, wodurch der kegelförmige Sitz 20 noch eine zusätzliche Aufgabe übernimmt. Die Rohrsitzfläche 16, die kegelförmige Innenfläche 34, die kegelförmige Innenfläche 22 und die kegelförmige Außenfläche 36 werden somit in einen flüssigkeitsdichten Verbund gebracht. Die Wandstärke des kegelförmigen Teils 32, d. h. der Abstand zwischen der kegelförmigen Innen- bzw. Außenfläche 34 bzw. 36, ist relativ gering verglichen mit der Größe der Konusverschraubung 10 (ca. 1 bis 2 Gewindegänge), so daß die Schraubverbindung der Konusmutter 18 mit dem Körper 14 nicht oder nicht nennenswert beeinträchtigt und die Güte der Verbindung nicht verschlechtert wird.

Selbstverständlich kann die Drossel 30 auch vollkommen entfernt und daraufhin die Konusverschraubung 10 als normale Verschraubung ohne Begrenzung der Durchflußmenge pro Zeiteinheit verwendet werden, weil die Öffnungswinkel gleich ausgebildet worden sind. Andererseits können auch verschiedenste Drosseln 30 mit unterschiedlich großen Öffnungen 44 eingesetzt werden, so daß die Durchflußmenge pro Zeiteinheit schnell und einfach dadurch regelbar ist, daß die Konusverschraubung 10 gelöst, zerlegt und die passende Drossel 30 eingesetzt wird.

Bei dem in den Figuren 2 und 3 gezeigten Ausführungsbeispiel ist die Drossel 30 einstückig maschinell aus einem Rundmetallstab gebildet, und die Öffnung 44 ist auf das erforderliche Maß in dem geschlossenen Ende 42 des zylindrischen Teils 40 gebohrt, um die gewünschte Durchflußmengenbegrenzung zu erreichen. Die Materialstärke des zylindrischen Teils 40 ist vorzugsweise ungefähr gleich der Stärke des kegelförmigen Teils 32. Eine Schräge 48 des kegelförmigen Teils 32 verläuft im wesentlichen senkrecht zu der kegelförmigen Innen- bzw. Außenfläche 34 bzw. 36.

Das zweite Ausführungsbeispiel der Drossel ist in den Figuren 4 und 5 dargestellt. In den Figuren 4 und 5 vorkommende Teile, die identisch mit in den Figuren 2 und 3 gezeigten Teilen sind, tragen neben der Bezugsnummer, die in allen Figuren für dieselben Teile gleich ist, außerdem ein "a". Die vorhandene Drossel 30a besteht aus einem gepreßten oder tiefgezogenen Metallteil. Ihr Ende 42a mit der Öffnung 44a

ist mehr abgerundet oder pfannenförmig als flach ausgebildet; im wesentlichen aber ist die Drossel 30a identisch
mit der zuvor beschriebenen Drossel 30.

Letztlich können auch noch andere Herstellungsarten, wie
beispielsweise Feingießen, zum Herstellen derartiger Drosseln 30 bzw. 30a Anwendung finden.

Patentansprüche

1. Einsatz zwischen zwei miteinander verbindbaren Flüssigkeitsdurchgängen, der zwischen die beiden Flüssigkeitsdurchgänge gespannt ist und eine geneigt verlaufende Dichtfläche aufweist, die gegen eine entsprechend ausgebildete Sitzfläche des einen Flüssigkeitsdurchganges anliegt, dadurch gekennzeichnet, daß der Einsatz (30) mit einer weiteren geneigt verlaufenden Dichtfläche (34, 36) versehen ist, die gegen eine entsprechend ausgebildete endseitige Sitzfläche (16, 22) an dem anderen Flüssigkeitsdurchgang (14, 12) zur Anlage bringbar ist.

2. Einsatz zwischen zwei miteinander verbindbaren Flüssigkeitsdurchgängen nach Anspruch 1, dadurch gekennzeichnet, daß die Neigungswinkel der Dichtflächen (34, 36) und der Sitzflächen (16, 22) gleich sind.

3. Einsatz zwischen zwei miteinander verbindbaren Flüssigkeitsdurchgängen nach Anspruch 1 oder 2, dadurch gekennzeichnet, daß die Dichtflächen (34, 36) und die Sitzflächen (16, 22) kegelförmig ausgebildet sind.

4. Einsatz zwischen zwei miteinander verbindbaren Flüssigkeitsdurchgängen nach einem oder mehreren der vorgenannten Ansprüche, dadurch gekennzeichnet, daß der Einsatz (30) ein Führungsteil (40) aufweist, dessen Außendurchmesser so gewählt ist, daß der Einsatz (30) in einem der Flüssigkeitsdurchgänge (12, 14) spielfrei einsetzbar ist.

5. Einsatz zwischen zwei miteinander verbindbaren Flüssigkeitsdurchgängen nach einem oder mehreren der vorgenannten Ansprüche, wobei der Einsatz mit einer Drosselbohrung versehen ist, dadurch gekennzeichnet, daß die Drosselbohrung (44) in dem Führungsteil (40) vorgesehen ist.

6. Einsatz zwischen zwei miteinander verbindbaren Flüssigkeitsdurchgängen nach einem oder mehreren der vorgenannten Ansprüche, wobei die Flüssigkeitsdurchgänge über eine Schraubverbindung zusammengehalten werden, dadurch gekennzeichnet, daß die Wandstärke des Einsatzes (30) zwischen seinen Dichtflächen (34, 36) die Verschraubungstiefe der Schraubverbindung (14, 18) nur unwesentlich beeinflußt.

7. Einsatz zwischen zwei miteinander verbindbaren Flüssigkeitsdurchgängen nach einem oder mehreren der vorgenannten Ansprüche, dadurch gekennzeichnet, daß der Einsatz (30) aus einem relativ verformungsfesten Werkstoff durch Preß-, Guß-, Tiefzieh- oder Drehverfahren herstellbar ist.

FIG. 1

FIG. 2          FIG. 3          FIG. 4          FIG. 5

Europäisches
Patentamt

**EUROPÄISCHER RECHERCHENBERICHT**

0098467

Nummer der Anmeldung

| | **EINSCHLÄGIGE DOKUMENTE** | | EP 83106129.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | US - A - 3 139 294 (C.M. RICHARDS)<br>* Gesamt *<br>-- | 1,2,3,7 | F 16 L 15/00<br>F 16 L 19/06 |
| X | CH - A5 - 598 530 (BOGARDHSKOPP-LINGAR AB)<br>* Gesamt *<br>-- | 1 | |
| A | US - A - 3 195 936 (CONDER)<br>* Gesamt *<br>-- | 1 | |
| A | FR - A - 1 133 399 (COMPAGNIE POUR LA FABRICATION DES COMPTEURS ET)<br>* Gesamt *<br>---- | 1 | |
| | | | **RECHERCHIERTE SACHGEBIETE (Int. Cl. ³)**<br><br>F 16 L 15/00<br>F 16 L 19/00<br>F 16 L 55/00<br>F 15 D 1/00 |

Der vorliegende Recherchenbericht wurde für alle Patentansprüche erstellt.

| Recherchenort | Abschlußdatum der Recherche | Prüfer |
|---|---|---|
| WIEN | 05-09-1983 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82